# EUROPÄISCHE PATENTSCHRIFT

(11) **EP 0 587 147 B1**
(45) Veröffentlichungstag und Bekanntmachung des Hinweises auf die Patenterteilung: **25.11.1998**
(21) Anmeldenummer: 93114431.5
(22) Anmeldetag: 08.09.1993
(51) Int. Cl.: B09B 3/00

(54) **Vorrichtung und Verfahren zur biologischen Behandlung organischer Substanzen**
Installation and method for the biological treatment of organic substances
Installation et procédé pour le traitement biologique de substances organiques

(30) Priorität: 08.09.1992 DE 4229926
(43) Veröffentlichungstag der Anmeldung: 16.03.1994
(73) Patentinhaber: Sonnen, Klaus, 56220 Bassenheim (DE); Sonnen, Hans, Dr., 56299 Ochtendung (DE)
(72) Erfinder: Sonnen, Klaus, 56220 Bassenheim (DE); Sonnen, Hans, Dr., 56299 Ochtendung (DE)
(74) Vertreter: von Hellfeld, Axel, Dr. Dipl.-Phys.

(56) Entgegenhaltungen:
- EP-A- 0 023 176
- EP-A- 0 192 285
- EP-A- 0 275 096
- EP-A- 0 450 459
- DE-A- 3 720 833
- DE-A- 4 031 862
- FR-A- 2 530 658
- US-A- 4 457 441

## Beschreibung

Die Erfindung betrifft eine Vorrichtung gemäß dem Oberbegriff des Patentanspruchs 1 und ein Verfahren gemäß dem Oberbegriff des Patentanspruchs 9. Solche Vorrichtungen bzw. Verfahren sind aus der DE-A-37 20 833 bekannt.

In unserer Gesellschaft führt die zunehmende Menge an Abfällen zu einer stetig steigenden Umweltbelastung. Zur Bewältigung dieser Problematik stellt das Recycling von Abfällen eine wichtige Größe dar. Die biologische Verwertung von organischen Substanzen, die als Abfall anfallen (z.B. pflanzliche und tierische Abfälle) oder als Verunreinigungen in Materialien vorliegen (z.B. Xenobiotika als Schadstoffe im Erdboden) ist eine bekannte Möglichkeit für die Rückführung dieser Stoffe in den Naturkreislauf.

Eine derartige Behandlung sollte zur Aufgabe haben, schnell, sicher, energetisch günstig und vor allen Dingen ohne irgendwelche Umweltbeeinträchtigungen die zu behandelnden Materialien der Wiederverwendung zuzuführen. Diese Ziele werden jedoch heute im Bereich der praktischen biologischen Abfallverwertung nur unzureichend erfüllt. Dies trifft ganz besonders bei der biologischen Behandlung kontaminierter Böden und dgl. zu, bei der weder die Prozeßbedingungen in gegenwärtigen Anlagen optimal sind, noch der Ausschluß jeglicher Umweltbeeinträchtigungen gewährleistet ist. Bei der Dekontamination von Böden unterscheidet man prinzipiell zwischen Behandlungsmaßnahmen des Materials in seinem natürlichen Bodenverbund (in-situ) und der Behandlung nach Auskofferung des Bodens. Solche ex-situ Methoden können vor Ort (on-site) oder extern (off-site) durchgeführt werden. Das Material wird dabei auf eine nach unten abgedichtete Basis abgeladen, um weitergehende Kontaminationen zu verhindern. Zum Schutze vor Emissionen durch austretende Gase werden solche Böden eingehaust (Zelt, Gebäude) und z.T. die Abluft über Filter gereinigt, bevor sie wieder in die Atmosphäre gelangt.

Der Erfindung liegt die Aufgabe zugrunde, den Stand der Technik gemäß der DE-A-37 20 833 dahingehend weiterzubilden, daß der Aufwand an Bauteilen und an Energie an die Menge der zu behandelnden Substanz anpaßbar ist.

Diese Aufgabe wird mit einer Vorrichtung, die die Merkmale des Patentanspruchs 1 aufweist, gelöst. Ein erfindungsgemäßes Verfahren zur Entsorgung von Schadstoffen mittels einer erfindungsgemäßen Vorrichtung ist im Patentanspruch 9 gekennzeichnet.

Der Erfindungsgegenstand kann sowohl "on-site" als auch "off-site" benutzt werden.

Eine deutliche Energiereduzierung wird durch die vorliegende Erfindung dadurch erreicht, daß das zu transportierende und/oder zu behandelnde Gasvolumen gegenüber herkömmlichen Systemen erheblich reduziert werden kann und nicht die gesamte Luftmenge in einem Zelt oder Gebäude umgewälzt werden muß.

Die Erfindung sieht vor, die Anlage in einer Art Baukasten-System erstellen zu können, indem zusätzlich zu den beiden Endsegmenten weitere, nach beiden Enden hin offene Zwischensegmente angekoppelt werden können, so daß das Volumen der Anlage optimal an die Menge des zu behandelnden Materials angepaßt werden kann.

Die einzelnen Segmente des Systems werden derart gestaltet, daß sie durch übliche Transportfahrzeuge (z. B. Tieflader) befördert werden können.

Aufgrund der abgedichteten Geschlossenheit des Systemes ist es möglich, sämtliche Gase, die dem Material entweichen oder beim biologischen Prozeß freigesetzt werden, entweder aktiv in einem Kreislauf zu führen oder mittels entsprechender Filter zu reinigen, bevor sie wieder an die Umgebung abgegeben werden. Hierbei kann eine Überwachung der Gaszusammenstellung zur Prozeßsteuerung genutzt werden.

In einer weiteren Ausführung ist vorgesehen, den Raum über dem kontaminierten Material innerhalb des Systemes mit einem Vakuum zu unterlegen, welches nicht nur zur Verbesserung der Luftzirkularisation durch das Material hindurch dient - damit verbunden eine verbesserte Versorgung der Mikroorganismen mit Sauerstoff - sondern darüberhinaus als Sicherungsmaßnahme für die Geschlossenheit des Behandlungssystemes eingesetzt wird, indem ein unerwünschter Gasaustritt in die Umgebungsluft selbst bei einer Leckage des Systems verhindert wird, da in einem solchen Fall Luft in das System eingesaugt wird.

Nach einer weiteren Ausführung der Erfindung wird vorgesehen, das Material während der Behandlung im geschlossenen System zu bearbeiten sowie den optimalen Feuchtegehalt und andere für die Behandlung wichtige Parameter einzustellen.

In einer weiteren Ausführung ist vorgesehen, die Bearbeitung des zu behandelnden Materials sowie die Überwachung und Erhaltung der optimalen Prozeßbedingungen dem Stand der Technik angepaßt zunehmend zu automatisieren. Die vorliegende Erfindung ist in besonderer Weise für die Entwicklung einer vollständig automatisierten Prozeßführung geeignet, bei der die Behandlung des Materials derart abläuft, daß keinerlei Berührung zwischen Personen und dem zu behandelnden Material oder anfallenden Gasen besteht.

Die optimale Einstellung des Feuchtegehaltes sowie weiterer prozeßrelevanter Parameter, deren Überwachung im geschlossenen System ständig möglich ist, kann gleichzeitig zur Materialbearbeitung mit der entsprechenden Materialbearbeitungs-vorrichtung oder unabhängig davon durchgeführt werden.

Die Erfindung wird anhand beiliegender Zeichnungen, die eine schematische Darstellung zweier Ausführungsbeispiele des Systemes und weiterer Einzelkomponenten aufzeigen, wie folgt beschrieben:
- Fig. 1: stellt die Seitenansicht einer Vorrichtung dar, bestehend aus zwei Endsegmenten und einem Zwischensegment.
- Fig. 2: zeigt einen axialen Längsschnitt durch die Vorrichtung abgebildet in Fig. 1.
- Fig. 3: zeigt eine Endansicht der Vorrichtung abgebildet in Fig. 1.
- Fig. 4: stellt einen Querschnitt der Vorrichtung abgebildet in Fig. 1 dar.
- Fig. 5: zeigt einen axialen Längsschnitt durch eine zweite Ausführungsform der Erfindung.

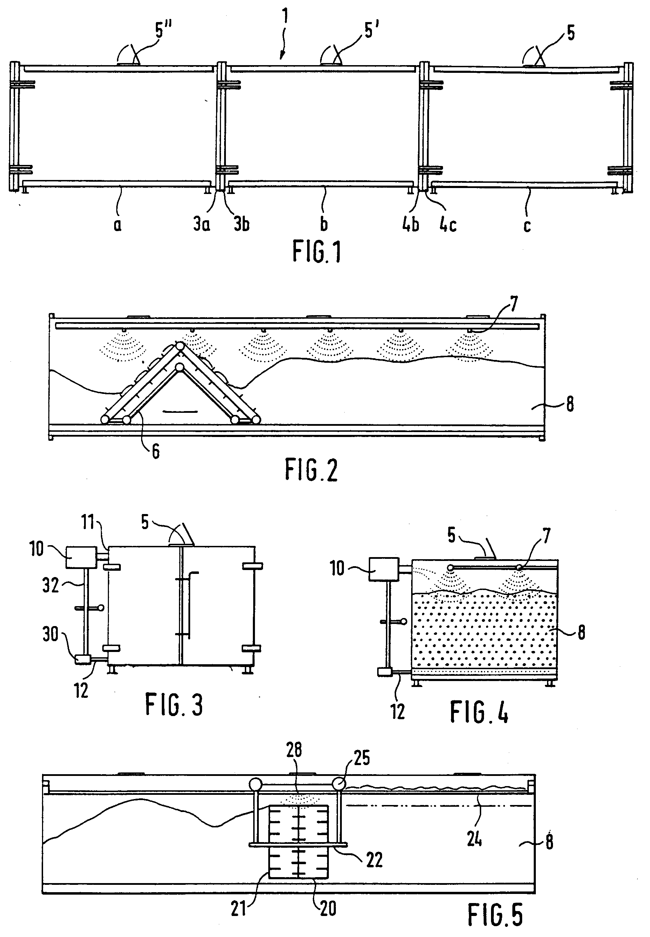

Wie in Fig. 1 bis 4 beispielhaft dargestellt, besteht die Einrichtung (1) aus jeweils zwei Endsegmenten (a, c) und ein oder mehreren nach beiden Enden hin offenen Zwischensegmenten (b), die mittels Dichtungsflansche (3a, 3b, 4a und 4b) miteinander verbunden sind. Jedes Segment enthält mindestens eine Öffnung, die dicht verschließbar ist. Die einzelnen Segmente werden derart konzipiert, daß sie mit Hilfe herkömmlicher Transportfahrzeuge transportiert werden können. Hierzu sind die Segmente mit Vorrichtungen versehen, die ein einfaches Be- und Endladen von Transportfahrzeugen gewährleisten. In dem gezeigten Beispiel sind die Basismaße der Segmente größer als ihre Höhenmaße, sodaß die Segmente seitlich liegend transportiert werden können. Jedes Endsegment kann mit einem oder mehreren Türelementen versehen werden. Die Endsegmente können die für den automatisierten Prozeß notwendigen Aggregate/Maschinen beherbergen.

Eine oder mehrere Vakuumpumpen zum Aufbau des Vakuums im System sind mit den einzelnen Segmenten an Position 11 oberhalb des zu behandelnden Materials (8) verbunden. Eine Leitung (12) am Boden der einzelnen Segmente kann mit der(den) Vakuumpumpe(n) verbunden werden. Eine Vorrichtung zur Material-bearbeitung (6) ist ebenso vorhanden wie eine Vorrichtung zur Berieselung (7).

In der zweiten Darstellung des Systems in Fig. 5 ist eine alternative Technik der Materialbearbeitung im geschlossenen System aufgezeigt; hierbei wird auf einer rotierenden Achse (22) eine messerartige Vorrichtung (20, 21) in der Weise benutzt, daß diese Vorrichtung sich auf Schienen (24) innerhalb des Systemes von einem Endsegment zum anderen Ende des Systemes bewegt und dabei das zu behandelnde Material bearbeitet. Die Energie für diese Bewegungen wird der Anlage elektrisch oder hydraulisch zugeführt. Bei dieser Materialbearbeitung kann auch eine Vorrichtung in das Bearbeitungsgerät eingebaut werden, die die Berieselung des Materials während der Bearbeitung durchführt (28).

Nachdem das System beladen ist, wird es geschlossen und ein Vakuum an die Oberfläche des zu behandelnden Materials mittels Vakuumpumpe(n) (10) angelegt. Sauerstoff kann über Anschlüsse (30) und Leitungen (12) zugeführt werden. Die Zuführung kann dabei unter Druck stattfinden. In bestimmten Intervallabständen, je nach Behandlungsfortgang und Prozeßbedingungen, kann durch die Bearbeitungsmaschine innerhalb des geschlossenen System die Materialbearbeitung von einem Ende der Einrichtung zum anderen Ende hin erfolgen. Maßnahmen zur Erhaltung der optimalen Prozeßbedingungen können gleichzeitig mit der Materialbearbeitung oder unabhängig davon durchgeführt werden.

Diese Art der Prozeßführung erlaubt ein gänzlich automatisiertes Betreiben der Anlage. Aufgrund des anliegenden Vakuums können auch bei auftretenden Undichtigkeiten keinerlei Gase aus dem System in die Atmosphäre entweichen. Beim Prozeß anfallende Gase werden entweder im Kreislauf dem System wieder zugeführt oder über Filter gereinigt, bevor sie das System verlassen. Der Kreislauf wird über eine Leitung 32 geführt.

Die Zuführung von Gasen erfolgt einzeln zu jedem Element und kann individuell gemessen und geregelt werden. Das zugeführte Gas kann z.B. Sauerstoff oder ein anderes Gas (evtl. auch Gasgemisch) sein, welches die Fortsetzung des biologischen Prozesses fördert. Dabei kann dieses Gas vorgewärmt werden, bevor es in die Einrichtung eingeleitet wird. Es ist ebenfalls vorgesehen, durch Erwärmung des zu behandelnden Materials während der biologischen Behandlung, diese zu beschleunigen. Hierbei kann man sich je nach Stand der Technik z.B. Abwärmequellen zunutzemachen wie z.B. die verschiedenen Geräte des Systems oder externe Abwärme.

Innerhalb der Einrichtung sind verschließbare Öffnungen (5) vorgesehen, die für Probenahmen während der Behandlung vorgesehen sind. Sie können mit Membranen ausgestattet sein, die der Beprobung dienen. Da das System unter Vakuum steht, können bei einer Probenahme keinerlei toxische Gase das System verlassen.

Im normalen Betrieb sollten keinerlei Sickerwässer auftreten. Falls doch überschüssige Flüssigkeiten anfallen sollten, so können diese über die Leitungen (12) aus dem System herausgesaugt und entsprechend behandelt werden. Im Allgemeinen wird das zu behandelnde Material (8) vor der Beladung einer je nach Bedarf notwendigen Vorbehandlung unterzogen. Hierbei wird beispielsweise eine Größenfraktionierung (evtl. Brechen des Materials) sowie eine Strukturverbesserung durch Homogenisierung und evtl. Zugabe von Strukturmitteln angestrebt. Weiterhin werden verschiedene Parameter wie z.B. Feuchte, pH-Wert und Nährstoffe mit Hilfsstoffen eingestellt sowie bei Bedarf entsprechend geeignete Mikroorganismen zugegeben. Unter Umständen kann bei einer solchen Vorbehandlung auch die Einstellung prozeßbedingter Konzentrationen an zu behandelnden Stoffen durchgeführt werden. Dabei könnte man sich auch bei der biologischen Behandlung bestimmter Stoffe die biologische Aktivität von natürlichen Mikroorganismen-Populationen zunutze machen, indem Stoffe mit einer organischen Matrix (wie z.B. Boden oder Kompost) vermischt in der Einrichtung behandelt werden. Eine derartige Strategie wird erst durch das geschlossene volumenvariable System der Erfindung möglich.

Gemäß einer Abwandlung des vorstehend beschriebenen Verfahrens läßt sich die Vorrichtung gemäß Fig. 1 bis 5 auch verwenden zum Einbringen von Schadstoffen in Substanzen, insbesondere zum Einbringen von Schadstoffen in Erdreich oder dergleichen. Diesem Aspekt der Erfindung liegt das Problem zugrunde, daß bestimmte Schadstoffe, insbesondere Chemikalien, auf unschädliche Weise "entfernt" werden müssen. Zum Beispiel tritt in der Arzneimittelindustrie das Problem auf, bestimmte Chemikalien auf unschädliche Weise aus dem Verkehr zu ziehen. Erdreich enthält "von Natur aus" Mikroorganismen, die ohne weitere zusätzliche Maßnahmen in der Lage sind, bestimmte Chemikalien zu metabolisieren. In diesem Falle werden die Chemikalien mittels einer Vorrichtung, wie sie oben anhand der Figuren 1 bis 5 beschrieben ist, in das Erdreich eingegeben und metabolisiert. Sind die im Erdreich von Natur aus vorgegebenen Mikroorganismen noch nicht auf die zu metabolisierenden Chemikalien "spezialisiert", ist es möglich, dem Erdreich Mikroorganismen-Populationen zuzusetzen, die in der Lage sind, die zur Metabolisierung vorgesehenen Chemikalien abzubauen.

## Patentansprüche

1. Vorrichtung für die biologische und/oder chemische Behandlung von mit Schadstoffen belasteten Substanzen, insbesondere organischen Substanzen oder Schadstoffe enthaltendem Erdreich, mit einem gegen die äußere Atmosphäre geschlossenen Raum (1) und zumindest einer Leitung (32), durch die Gas in einem Kreislauf zirkulierbar ist, der in einen unteren Abschnitt des Raumes mündet und aus einem oberen Abschnitt des Raumes herausführt,
dadurch gekennzeichnet, daß
der geschlossene Raum (1) modular aus zwei Endsegmenten (a, c) und in Abhängigkeit von der Menge zu behandelnder Substanz aus Zwischensegmenten (b) zusammenfügbar ist.

2. Vorrichtung nach Anspruch 1,
dadurch gekennzeichnet, daß
der Raum (1) in der Vorrichtung gasdicht ist und in ihm ein Unterdruck gegenüber der äußeren Atmosphäre erzeugt ist.

3. Vorrichtung nach einem der Ansprüche 1 oder 2,
dadurch gekennzeichnet, daß
eine Einrichtung vorgesehen ist, um von der zu behandelnden Substanz abgegebene oder bei der Behandlung entstehende Stoffe, insbesondere Gase, aus dem Kreislauf zu entfernen.

4. Vorrichtung nach einem der Ansprüche 1, 2 oder 3,
dadurch gekennzeichnet, daß
eine Einrichtung (12) vorgesehen ist, um Sauerstoff oder andere Gase in den Raum (1) einzugeben.

5. Vorrichtung nach einem der vorhergehenden Ansprüche,
dadurch gekennzeichnet, daß
Sauerstoff und/oder andere Gase unterhalb der zu behandelnden Substanzen in den durch die Segmente gebildeten Raum eingeführt werden, so daß ein Druckgradient entsteht und oberhalb der Substanzen ein geringerer Druck herrscht als unterhalb.

6. Vorrichtung nach einem der vorhergehenden Ansprüche,
dadurch gekennzeichnet, daß
eine Einrichtung (6; 20, 21, 22) vorgesehen ist, um die Substanzen während der Behandlung in dem geschlossenen Raum (1) mechanisch zu bearbeiten.

7. Vorrichtung nach einem der vorhergehenden Ansprüche,
dadurch gekennzeichnet, daß
eine Einrichtung vorgesehen ist, um Flüssigkeiten in den Raum einzubringen.

8. Vorrichtung nach einem der vorhergehenden Ansprüche,
dadurch gekennzeichnet, daß
Mittel vorgesehen sind, um auf der Unterseite der zu behandelnden Substanzen periodisch in Intervallen einen Gasdruck zu erzeugen.

9. Verfahren zum Überführen von chemischen Schadstoffen in Erde,
dadurch gekennzeichnet, daß
die Schadstoffe in Erde eingegeben werden, die mit einer den Schadstoffen zugeordneten Mikroorganismen-Population versehen ist oder wird und zusammen mit den Schadstoffen in eine Vorrichtung gemäß einem der Ansprüche 1 bis 8 eingegeben und mit einem durch den Kreislauf zirkulierenden Gas behandelt wird.

## Claims

1. An apparatus for the biological and/or chemical treatment of material contaminated by harmful substances, especially organic material or soil containing harmful substances, comprising a space (1) closed off from the outside atmosphere, and at least one conduit (32) through which gas can be circulated in a circuit which discharges into a lower section of the space and exits from an upper section of the space,
characterized in that the closed-off space (1) is adapted to be assembled modularly from two end segments (a, c) and, depending on the amount of material to be treated, from intermediate segments (b).

2. The apparatus according to claim 1,
characterized in that the space (1) in the apparatus is gas-tight and that sub-pressure is generated therein with respect to the outside atmosphere.

3. The apparatus according to claim 1 or claim 2,
characterized in that a means is provided to remove from the circuit substances released from or resulting during treatment of the material, especially gases.

4. The apparatus according to one of claims 1, 2 or 3,
characterized in that a means (12) is provided for introducing oxygen or other gases into the space (1).

5. The apparatus according to one of the preceding claims,
characterized in that oxygen and/or other gases are introduced into the space formed by the segments below the material to be treated, so that a pressure gradient results and lower pressure prevails above the material than below the same.

6. The apparatus according to one of the preceding claims,
characterized in that a means (6; 20, 21, 22) is provided to work mechanically on the material during treatment in the closed space (1).

7. The apparatus according to one of the preceding claims,
characterized in that a means is provided to introduce liquids into the space.

8. The apparatus according to one of the preceding claims,
characterized in that means are provided for generating gas pressure at the underside of the material to be treated periodically at intervals.

9. A method of transferring chemical harmful substances into soil,
characterized in that the harmful substances are introduced into soil that is or will be provided with a microorganism population coordinated with the harmful substances and loaded, together with the harmful substances, into an apparatus according to one of claims 1 to 8 and treated with a gas circulating through the circuit.

## Revendications

1. Dispositif pour le traitement biologique et/ou chimique de substances chargées de produits nocifs, en particulier de terre contenant des substances organiques ou des produits nocifs, comprenant un volume (1) fermé isolé par rapport à l'atmosphère extérieure et au moins une conduite (32) dans laquelle du gaz peut circuler dans un circuit fermé qui débouche dans une portion inférieure du volume et part d'une portion supérieure du volume,
caractérisé en ce que
le volume fermé (1) peut être assemblé de façon modulaire à partir de deux segments d'extrémité (a, c) et en fonction de la quantité de substance à traiter de segments intermédiaires (b).

2. Dispositif selon la revendication 1,
caractérisé en ce que
le volume (1) dans le dispositif est étanche aux gaz et en ce qu'une dépression par rapport à l'atmosphère environnante y est engendrée.

3. Dispositif selon l'une des revendications 1 ou 2,
caractérisé en ce
qu'il y a un moyen pour éliminer du circuit fermé les matières dégagées par la substance à traiter ou formées lors du traitement, en particulier les gaz.

4. Dispositif selon l'une quelconque des revendications 1, 2 ou 3,
caractérisé en ce
qu'il y a un moyen (12) pour introduire de l'oxygène ou d'autres gaz dans le volume (1).

5. Dispositif selon l'une quelconque des revendications précédentes,
caractérisé en ce que
l'oxygène et/ou les autres gaz sont introduits en dessous des substances à traiter dans le volume formé par les segments de telle façon qu'un gradient de pression s'établisse et qu'une pression plus faible règne au dessus des substances qu'en dessous.

6. Dispositif selon l'une quelconque des revendications précédentes,
caractérisé en ce
qu'il y a un moyen (6; 20, 21, 22) pour travailler mécaniquement les substances pendant le traitement dans le volume fermé (1).

7. Dispositif selon l'une quelconque des revendications précédentes,
caractérisé en ce
qu'il y a un moyen pour introduire des liquides dans le volume.

8. Dispositif selon l'une quelconque des revendications précédentes,
caractérisé en ce
qu'il y a des moyens pour engendrer périodiquement à intervalles une pression de gaz sur la face inférieure des substances à traiter.

9. Procédé pour transporter des produits chimiques nocifs dans de la terre,
caractérisé en ce que
les produits nocifs sont introduits dans de la terre qui est déjà pourvue ou que l'on pourvoit d'une population de micro-organismes associée aux produits nocifs et est introduite avec les produits nocifs dans un dispositif selon l'une quelconque des revendications 1 à 8 et est traitée avec un gaz circulant dans le circuit fermé.
